# EUROPÄISCHE PATENTSCHRIFT

(11) **EP 3 365 879 B1**
(45) Veröffentlichungstag und Bekanntmachung des Hinweises auf die Patenterteilung: **03.07.2024**
(21) Anmeldenummer: 16777680.6
(22) Anmeldetag: 05.10.2016
(51) Int. Cl.: G08G 1/16, B60W 30/09, G08G 1/14

(54) **VERFAHREN UND VORRICHTUNG ZUM VERRINGERN EINES KOLLISIONSRISIKOS EINER KOLLISION EINES KRAFTFAHRZEUGS MIT EINEM OBJEKT**
METHOD AND DEVICE FOR REDUCING THE RISK OF A COLLISION OF A MOTOR VEHICLE WITH AN OBJECT
PROCÉDÉ ET DISPOSITIF POUR RÉDUIRE LE RISQUE DE COLLISION D'UN VÉHICULE À MOTEUR AVEC UN OBJET

(30) Priorität: 22.10.2015 DE 102015220640
(43) Veröffentlichungstag der Anmeldung: 29.08.2018
(73) Patentinhaber: Robert Bosch GmbH, 70442 Stuttgart (DE)
(72) Erfinder: NORDBRUCH, Stefan, 70806 Kornwestheim (DE)
(86) Internationale Anmeldenummer: PCT/EP2016/073748
(87) Internationale Veröffentlichungsnummer: WO 2017/067786

(56) Entgegenhaltungen:
- EP-A1- 2 887 335
- EP-A2- 0 545 437
- DE-A1-102008 036 009
- DE-A1-102011 116 822
- DE-A1-102012 210 059
- DE-A1-102013 215 960
- KYOUNGHWAN AN ET AL: "Cooperative vehicle control system based on fusion map", COMPUTING AND CONVERGENCE TECHNOLOGY (ICCCT), 2012 7TH INTERNATIONAL CONFERENCE ON, IEEE, 3. Dezember 2012 (2012-12-03), Seiten 94-97, XP032421998, ISBN: 978-1-4673-0894-6

## Beschreibung

Die Erfindung betrifft ein Verfahren und eine Vorrichtung zum Verringern eines Kollisionsrisikos einer Kollision eines Kraftfahrzeugs mit einem Objekt. Die Erfindung betrifft ferner einen Parkplatz.

### Stand der Technik

Die Offenlegungsschrift EP 2887335 A1 zeigt ein Verfahren zum Warnen des Fahrers eines Kraftfahrzeugs vor einer Kollisionsgefahr.

Die Offenlegungsschrift DE 10 2012 210 059 A1 zeigt ein Verfahren zur Verifikation und/oder Vorverarbeitung von Datenpaketen und ein zur Durchführung des Verfahrens eingerichtetes Steuergerät.

Die Offenlegungsschrift DE 10 2008 036 009 A1 offenbart ein Verfahren zum Kollisionsschutz eines Kraftfahrzeugs.

Die Offenlegungsschrift DE 10 2012/222 562 A1 zeigt ein System für bewirtschaftete Parkflächen zur Überführung eines Fahrzeugs von einer Startposition in eine Zielposition.

Bei einem solchen Überführen ist es wichtig, dass das Fahrzeug nicht mit Objekten, zum Beispiel Personen oder weiteren Fahrzeugen, kollidiert.

### Offenbarung der Erfindung

Die der Erfindung zugrundeliegende Aufgabe ist darin zu sehen, ein effizientes Konzept zum effizienten Verringern eines Kollisionsrisikos einer Kollision eines Kraftfahrzeugs mit einem Objekt bereitzustellen.

Diese Aufgabe wird mittels des jeweiligen Gegenstands der unabhängigen Ansprüche gelöst. Vorteilhafte Ausgestaltungen der Erfindung sind Gegenstand von jeweils abhängigen Unteransprüchen.

Nach einem Aspekt wird ein Verfahren zum Verringern eines Kollisionsrisikos einer Kollision eines Kraftfahrzeugs mit einem Objekt bereitgestellt, wobei das Kraftfahrzeug fahrerlos innerhalb eines Parkplatzes (401) fährt, umfassend die folgenden Schritte:
- Vorgeben eines Sicherheitsbereichs, der einen abgegrenzten Teilbereich eines momentanen Kraftfahrzeugumfelds eines innerhalb eines Parkplatzes fahrenden Kraftfahrzeugs festlegt,
- Ermitteln eines sich innerhalb eines Parkplatzes befindlichen als kritisch klassifizierten Orts, wobei das Ermitteln des kritischen Orts eine Umfeldanalyse von Umfelddaten auf mögliche kritische Orte umfasst, wobei die Umfelddaten mittels eines oder mehrerer Umfeldsensoren bereitgestellt werden, die das momentane Kraftfahrzeugumfeld erfasst haben, wobei einer oder mehrere der Umfeldsensoren Umfeldsensoren des Parkplatzes sind,
- Anpassen des vorgegebenen Sicherheitsbereichs bei einer Fahrt des Kraftfahrzeugs auf den kritischen Ort zu derart, dass der kritische Ort innerhalb des angepassten Sicherheitsbereichs liegt,
- Überwachen des angepassten Sicherheitsbereichs während der Fahrt des Kraftfahrzeugs auf den kritischen Ort zu auf ein sich in den angepassten Sicherheitsbereich bewegendes Objekt und/oder ein sich innerhalb des angepassten Sicherheitsbereichs befindliches Objekt,
- Steuern einer Durchführung einer oder mehrerer Sicherheitsaktionen basierend auf der Überwachung, um ein Kollisionsrisiko einer Kollision des Kraftfahrzeugs mit dem Objekt zu verringern, wobei die eine oder die mehreren Sicherheitsaktionen Elemente der folgenden Gruppe von Sicherheitsaktionen sind: Reduzieren einer momentanen Kraftfahrzeuggeschwindigkeit, Vorbereiten einer Bremsanlage des Kraftfahrzeugs auf eine Bremsung, Durchführen eines Notstopps.

Nach einem anderen Aspekt wird eine Vorrichtung zum Verringern eines Kollisionsrisikos einer Kollision eines Kraftfahrzeugs mit einem Objekt bereitgestellt, umfassend:
- eine Vorgabeeinrichtung zum Vorgeben eines Sicherheitsbereichs, der einen abgegrenzten Teilbereich eines momentanen Kraftfahrzeugumfelds eines innerhalb eines Parkplatzes fahrenden Kraftfahrzeugs festlegt,
- eine Ermittlungseinrichtung zum Ermitteln eines sich innerhalb eines Parkplatzes befindlichen als kritisch klassifizierten Orts, wobei die Ermittlungseinrichtung ausgebildet ist, zum Ermitteln des kritischen Orts eine Umfeldanalyse von dem momentanen Kraftfahrzeugumfeld entsprechenden Umfelddaten auf mögliche kritische Orte durchzuführen, wobei die Umfelddaten mittels eines oder mehrerer Umfeldsensoren bereitgestellt werden, die das momentane Kraftfahrzeugumfeld erfasst haben, wobei einer oder mehrere der Umfeldsensoren Umfeldsensoren des Parkplatzes sind,
- eine Anpassungseinrichtung zum Anpassen des vorgegebenen Sicherheitsbereichs bei einer Fahrt des Kraftfahrzeugs auf den kritischen Ort zu derart, dass der kritische Ort innerhalb des angepassten Sicherheitsbereichs liegt,
- eine Überwachungseinrichtung zum Überwachen des angepassten Sicherheitsbereichs während der Fahrt des Kraftfahrzeugs auf den kritischen Ort zu auf ein sich in den angepassten Sicherheitsbereich bewegendes Objekt und/oder ein sich innerhalb des angepassten Sicherheitsbereichs befindliches Objekt,
- eine Steuerungseinrichtung zum Steuern einer Durchführung einer oder mehrerer Sicherheitsaktionen basierend auf der Überwachung, um ein Kollisionsrisiko einer Kollision des Kraftfahrzeugs mit dem Objekt zu verringern, wobei die eine oder die mehreren Sicherheitsaktionen Elemente der folgenden Gruppe von Sicherheitsaktionen sind: Reduzieren einer momentanen Kraftfahrzeuggeschwindigkeit, Vorbereiten einer Bremsanlage des Kraftfahrzeugs auf eine Bremsung, Durchführen eines Notstopps.

Nach einem anderen Aspekt wird ein Parkplatz für Kraftfahrzeuge bereitgestellt, wobei der Parkplatz die erfindungsgemäße Vorrichtung umfasst.

Die Erfindung umfasst also insbesondere und unter anderem den Gedanken, einen als kritisch klassifizierten Ort, der sich innerhalb eines Parkplatzes befindet, in einen Sicherheitsbereich mitaufzunehmen, um so diesen kritischen Ort effizient überwachen zu können. Dies dadurch, dass der vorgegebene Sicherheitsbereich derart angepasst wird, dass der kritische Ort innerhalb des angepassten Sicherheitsbereichs liegt. Es wird somit in vorteilhafter Weise sichergestellt, dass ein kritischer Ort, der sich innerhalb des Parkplatzes befindet, bei der Fahrt des Kraftfahrzeugs auf den kritischen Ort zu überwacht wird, so dass bei Bedarf eine oder mehrere Sicherheitsaktionen basierend auf der Überwachung durchgeführt werden können.

Dadurch wird insbesondere der technische Vorteil bewirkt, dass ein Kollisionsrisiko einer Kollision eines Kraftfahrzeugs mit einem Objekt, welches sich innerhalb des angepassten Sicherheitsbereichs befindet und/oder mit einem Objekt, welches sich in den angepassten Sicherheitsbereich bewegt, effizient verringert werden kann.

Ein Kraftfahrzeugumfeld bezeichnet insbesondere einen Bereich um das Kraftfahrzeug bis zu einem Abstand von 3 m, beispielsweise 2 m, vorzugsweise 1,5 m, zum Beispiel 1 m.

Ein Parkplatz im Sinne der vorliegenden Erfindung kann auch als eine Parkfläche bezeichnet werden und dient als Abstellfläche für Kraftfahrzeuge. Der Parkplatz bildet somit insbesondere eine zusammenhängende Fläche, die mehrere Stellplätze (bei einem Parkplatz auf privatem Grund) oder Parkstände (bei einem Parkplatz auf öffentlichem Grund) aufweist. Der Parkplatz ist nach einer Ausführungsform als ein Parkhaus ausgebildet. Der Parkplatz ist nach einer Ausführungsform als eine Parkgarage ausgebildet.

Nach einer Ausführungsform ist vorgesehen, dass das Ermitteln des kritischen Orts ein Auslesen eines als kritisch klassifizierten Orts aus einer digitalen Karte des Parkplatzes umfasst.

Dadurch wird insbesondere der technische Vorteil bewirkt, dass ein kritischer Ort effizient ermittelt werden kann. Zum Beispiel ist vorgesehen, dass die digitale Karte über ein Kommunikationsnetzwerk an das Kraftfahrzeug gesendet wird. Zum Beispiel ist vorgesehen, dass die digitale Karte bereits in der Vorrichtung respektive im Kraftfahrzeug gespeichert ist.

Es ist vorgesehen, dass das Ermitteln des kritischen Orts eine Umfeldanalyse von Umfelddaten auf mögliche kritische Orte umfasst, wobei die Umfelddaten mittels eines oder mehrerer Umfeldsensoren bereitgestellt werden, die das momentane Kraftfahrzeugumfeld erfasst haben.

Dadurch wird insbesondere der technische Vorteil bewirkt, dass mögliche kritische Orte innerhalb des Parkplatzes effizient erkannt werden können.

Es handelt es bei sich bei dem oder den Umfeldsensoren um einen oder mehrere Umfeldsensoren des Parkplatzes. Das heißt, dass mittels eines oder mehrerer Umfeldsensoren des Parkplatzes ein momentanes Umfeld des Kraftfahrzeugs erfasst wird, um entsprechende Umfelddaten zu ermitteln.

Die vorstehend ermittelten Umfelddaten werden dann für die Umfeldanalyse verwendet. Das heißt also, dass der Parkplatz mehrere Umfeldsensoren umfasst, die innerhalb des Parkplatzes angeordnet sind.

Ein Umfeldsensor im Sinne der vorliegenden Erfindung ist zum Beispiel einer der folgenden Umfeldsensoren: Radarsensor, Lidarsensor, Lasersensor, Ultraschallsensor, Infrarotsensor, Magnetsensor, Videosensor oder Lichtschrankensensor.

Nach einer weiteren Ausführungsform ist vorgesehen, dass, wenn die Umfeldanalyse ergeben hat, dass sich ein Objekt in einen Fahrweg des Kraftfahrzeugs bewegt hat oder bewegen wird, ein momentaner Ort des Objekts auf dem Fahrweg und/oder ein Ort, an welchem das Objekt sich in den Fahrweg bewegen wird, als ein kritischer Ort respektive als kritische Orte klassifiziert werden.

Dadurch wird insbesondere der technische Vorteil bewirkt, dass auch spontan entstehende kritische Orte effizient erkannt werden können. Denn wenn zum Beispiel eine Person in den Fahrweg des Kraftfahrzeugs tritt, so ist der Ort, an welchem die Person in den Fahrweg des Kraftfahrzeugs tritt, ein kritischer Ort, der überwacht werden sollte, um eine mögliche Kollision mit der Person zu verhindern.

Ein Objekt im Sinne der vorliegenden Erfindung ist zum Beispiel ein weiteres Kraftfahrzeug, eine Person oder ein Tier oder ein stationäres Infrastrukturelement, das zum Beispiel vom Parkplatz umfasst ist (Parkplatzinfrastrukturelement). Zum Beispiel ist das stationäre Infrastrukturelement eine Säule, ein Bordstein oder eine Wand.

Das erfindungsgemäße Konzept ist insbesondere auch für mehrere kritische Orte vorgesehen. Das heißt also, dass wenn der kritische Ort im Singular steht, stets der Plural oder umgekehrt mitgelesen werden soll.

In einer weiteren Ausführungsform ist vorgesehen, dass, wenn die Umfeldanalyse ergeben hat, dass sich zumindest ein Parkplatzinfrastrukturelement im Kraftfahrzeugumfeld befindet, ein Ort des Parkplatzinfrastrukturelements als kritischer Ort klassifiziert wird, wobei das zumindest eine Parkplatzinfrastrukturelement ein Element aus der folgenden Gruppe von Parkplatzinfrastrukturelementen ist: Tür, Rampe, Eingang, Einfahrt, Ausgang, Ausfahrt, Schranke, Kurve, Säule.

Dadurch wird insbesondere der technische Vorteil bewirkt, dass kritische Parkplatzinfrastrukturelemente effizient überwacht werden können. Denn so sind die vorstehend genannten Parkplatzinfrastrukturelemente kritische Orte, insofern sich an diesen Parkplatzinfrastrukturelementen weitere Kraftfahrzeuge oder Personen befinden respektive durch diese den Parkplatz verlassen respektive eintreten. So kann es zum Beispiel passieren, dass durch die Tür eine Person tritt. Da Umfeldsensoren des Kraftfahrzeugs in der Regel nicht durch eine Tür durchsehen können, ist es technisch sinnvoll, die Tür in den Sicherheitsbereich mitaufzunehmen, um diese dann gesondert und bevorzugt zu überwachen, um für den Fall, dass eine Person durch die Tür tritt, effizient darauf vorbereitet zu sein.

Nach einer weiteren Ausführungsform ist vorgesehen, dass das Ermitteln des kritischen Orts umfasst, dass Neigungsdaten eines vom Kraftfahrzeug umfassten Neigungssensors auf eine Neigung des Kraftfahrzeugs analysiert werden, wobei, wenn eine detektierte Neigung größer oder größer gleich einem vorbestimmten Neigungsschwellwert ist, bestimmt wird, dass sich das Kraftfahrzeug momentan auf einer Rampe befindet, so dass die Rampe als kritischer Ort klassifiziert wird.

Dadurch wird insbesondere der technische Vorteil bewirkt, dass ein kritischer Ort, hier die Rampe, effizient erkannt werden kann. Denn so können Umfeldsensoren eines Kraftfahrzeugs in der Regel nicht über die Rampe hinaussehen, so dass sich am Ende der Rampe zum Beispiel ein Objekt befinden könnte. Somit ist es also technisch sinnvoll, die Rampe als kritischen Ort in den Sicherheitsbereich, der überwacht wird, mitaufzunehmen.

Nach einer Ausführungsform ist vorgesehen, dass das Anpassen des vorgegebenen Sicherheitsbereichs umfasst, dass der vorgegebene Sicherheitsbereich auf den kritischen Ort ausgerichtet wird.

Dadurch wird insbesondere der technische Vorteil bewirkt, dass das Anpassen effizient durchgeführt werden kann.

Das Ausrichten umfasst hier insbesondere, dass der angepasste Sicherheitsbereich eine Vorzugsrichtung aufweist, die in Richtung des kritischen Orts zeigt. Dies zum Beispiel analog zu einer Radarkeule eines Radarsignals oder allgemein einer Antennenkeule eines Antennensignals. Das heißt, dass das Ausrichten umfasst, dass der Sicherheitsbereich mit einer Vorzugsrichtung versehen wird, die in Richtung des kritischen Orts zeigt.

Gemäß einer weiteren Ausführungsform ist vorgesehen, dass das Anpassen ansprechend auf ein Triggersignal initiiert und durchgeführt wird.

Dadurch wird insbesondere der technische Vorteil bewirkt, dass das Anpassen auch dann durchgeführt wird, wenn zum Beispiel eine Umfeldanalyse selbst noch keinen kritischen Ort ermitteln konnte. So kann zum Beispiel der Fall passieren, dass das Kraftfahrzeug selbst keinen kritischen Ort innerhalb des Parkplatzes erkennen konnte, wohingegen kraftfahrzeugextern mittels der Vorrichtung ein solch kritischer Ort sehr wohl detektiert werden konnte. Wenn dann mittels der kraftfahrzeugexternen Vorrichtung ein Triggersignal an das Kraftfahrzeug umfassend eine eigene kraftfahrzeuginterne Vorrichtung gesendet wird, so kann die Vorrichtung des Kraftfahrzeugs dann ansprechend auf das Triggersignal das Anpassen initiieren und durchführen.

Das heißt also, dass nach einer Ausführungsform das Triggersignal über ein Kommunikationsnetzwerk empfangen respektive ausgesendet wird. Empfangen wird es vom Kraftfahrzeug. Gesendet wird es von der Vorrichtung des Parkplatzes.

Das Kommunikationsnetzwerk umfasst nach einer Ausführungsform ein Mobilfunkkommunikationsnetzwerk und/oder ein WLAN-Kommunikationsnetzwerk und/oder ein Kommunikationsnetzwerk nach dem LoRa-Standard. "LoRa" steht für "Low Power Wide-Range Communication". Ein solches Kommunikationsnetzwerk kann auch als ein LoRa-Kommunikationsnetzwerk bezeichnet werden.

In einer Ausführungsform wird respektive ist eine Kommunikation über das Kommunikationsnetzwerk verschlüsselt.

Nach einer Ausführungsform ist eine Kommunikationsschnittstelle zur Kommunikation über ein Kommunikationsnetzwerk vorgesehen.

Die Kommunikationsschnittstelle ist nach einer Ausführungsform von der Vorrichtung umfasst.

Nach einer Ausführungsform ist die Kommunikationsschnittstelle vom Parkplatz umfasst.

In einer weiteren Ausführungsform umfasst das Kraftfahrzeug die Kommunikationsschnittstelle.

Nach einer Ausführungsform umfasst sowohl der Parkplatz als auch das Kraftfahrzeug eine Kommunikationsschnittstelle.

Nach einer Ausführungsform umfasst das Kraftfahrzeug einen oder mehrere Umfeldsensoren.

Gemäß einer weiteren Ausführungsform umfasst der Parkplatz einen oder mehrere Umfeldsensoren.

In einer Ausführungsform umfasst die Vorrichtung einen oder mehrere Umfeldsensoren.

Die Formulierung "respektive" umfasst insbesondere die Formulierung "und/oder".

Ein kritischer Ort im Sinne der vorliegenden Erfindung bezeichnet insbesondere einen Ort, der eine Gefährdung für das Kraftfahrzeug aufweist. Ein kritischer Ort kann somit insbesondere als ein Gefährdungsort bezeichnet werden. Ein Gefährdungs- oder ein kritischer Ort weist insbesondere einen Gefährdungswert auf, der größer oder größer gleich einem vorbestimmten Gefährdungsschwellwert ist.

Nach einer Ausführungsform ist vorgesehen, dass der vorgegebene Sicherheitsbereich eine Rechteckform, eine Kreisform oder eine Ovalform aufweist und zumindest teilweise, insbesondere vollständig, das Kraftfahrzeug umgibt, wobei das Anpassen ein Vergrößern der Rechteckform, der Kreisform oder der Ovalform umfasst.

Dadurch wird insbesondere der technische Vorteil bewirkt, dass das Anpassen effizient durchgeführt werden kann.

Nach einer Ausführungsform ist vorgesehen, dass lediglich ein Abschnitt der Rechteckform respektive der Kreisform respektive der Ovalform derart vergrößert wird, dass dieser vergrößerte Abschnitt den kritischen Ort oder die kritischen Orte umfasst.

Ein Vergrößern im Sinne dieser Beschreibung bezeichnet zum Beispiel ein skaliertes Vergrößern.

Ein Vergrößern im Sinne dieser Beschreibung bezeichnet zum Beispiel eine Veränderung der ursprünglichen Form des Sicherheitsbereichs derart, dass die veränderte Form größer ist als die ursprüngliche Form. Vergrößern heißt hier insbesondere, dass eine Fläche des Sicherheitsbereichs vergrößert wird. So ist es zum Beispiel vorgesehen, dass eine Kreisform zu einer Rechteckform geändert wird.

Nach einer Ausführungsform ist vorgesehen, dass die Vorrichtung zum Verringern eines Kollisionsrisikos einer Kollision eines Kraftfahrzeugs mit einem Objekt ausgebildet oder eingerichtet ist, das Verfahren zum Verringern eines Kollisionsrisikos einer Kollision eines Kraftfahrzeugs mit einem Objekt aus- oder durchzuführen.

Nach einer Ausführungsform wird das Verfahren zum Verringern eines Kollisionsrisikos einer Kollision eines Kraftfahrzeugs mit einem Objekt mittels der Vorrichtung zum Verringern eines Kollisionsrisikos einer Kollision eines Kraftfahrzeugs mit einem Objekt aus- oder durchgeführt.

Technische Funktionalitäten und Merkmale der Vorrichtung ergeben sich analog aus entsprechenden technischen Funktionalitäten und Merkmalen des Verfahrens und umgekehrt.

Nach einer anderen Ausführungsform ist vorgesehen, dass der Parkplatz ausgebildet oder eingerichtet ist, das erfindungsgemäße Verfahren aus- oder durchzuführen.

In einer Ausführungsform ist vorgesehen, dass die Ermittlungseinrichtung ausgebildet ist, zum Ermitteln des kritischen Orts einen als kritisch klassifizierten Ort aus einer digitalen Karte des Parkplatzes auszulesen.

Gemäß einer Ausführungsform ist vorgesehen, dass die Ermittlungseinrichtung ausgebildet ist, zum Ermitteln des kritischen Orts eine Umfeldanalyse von dem momentanen Kraftfahrzeugumfeld entsprechenden Umfelddaten auf mögliche kritische Orte durchzuführen.

Nach einer weiteren Ausführungsform ist vorgesehen, dass die Ermittlungseinrichtung ausgebildet ist, wenn die Umfeldanalyse ergeben hat, dass sich ein Objekt in einen Fahrweg des Kraftfahrzeugs bewegt hat oder bewegen wird, ein momentaner Ort des Objekts auf dem Fahrweg und/oder ein Ort, an welchem das Objekt sich in den Fahrweg bewegen wird, als einen kritischen Ort respektive als kritische Orte zu klassifizieren.

In einer anderen Ausführungsform ist vorgesehen, dass die Ermittlungseinrichtung ausgebildet ist, wenn die Umfeldanalyse ergeben hat, dass sich zumindest ein Parkplatzinfrastrukturelement im Kraftfahrzeugumfeld befindet, einen Ort des Parkplatzinfrastrukturelements als kritischen Ort zu klassifizieren, wobei das zumindest eine Parkplatzinfrastrukturelement ein Element aus der folgenden Gruppe von Parkplatzinfrastrukturelementen ist: Tür, Rampe, Eingang, Einfahrt, Ausgang, Ausfahrt, Schranke, Kurve, Säule.

Nach einer weiteren Ausführungsform ist vorgesehen, dass die Ermittlungseinrichtung ausgebildet ist, zum Ermitteln des kritischen Orts Neigungsdaten eines vom Kraftfahrzeug umfassten Neigungssensors auf eine Neigung des Kraftfahrzeugs zu analysieren, wobei die Ermittlungseinrichtung ferner ausgebildet ist, wenn eine detektierte Neigung größer oder größer gleich einem vorbestimmten Neigungsschwellwert ist, zu bestimmen, dass sich das Kraftfahrzeug momentan auf einer Rampe befindet, und die Rampe als kritischen Ort zu klassifizieren.

Nach einer weiteren Ausführungsform ist vorgesehen, dass die Anpassungseinrichtung ausgebildet ist, zum Anpassen des vorgegebenen Sicherheitsbereichs den vorgegebenen Sicherheitsbereich auf den kritischen Ort auszurichten.

Nach einer weiteren Ausführungsform ist vorgesehen, dass die Anpassungseinrichtung ausgebildet ist, das Anpassen ansprechend auf ein Triggersignal zu initiieren und durchzuführen.

Nach einer weiteren Ausführungsform ist vorgesehen, dass die Anpassungseinrichtung ausgebildet ist, zum Anpassen eines eine Rechteckform, eine Kreisform oder eine Ovalform aufweisenden und das Kraftfahrzeug zumindest teilweise, insbesondere vollständig, umgebenden vorgegebenen Sicherheitsbereichs die Rechteckform, die Kreisform oder die Ovalform zu vergrößern.

Erfindungsgemäss ist vorgesehen, dass die eine oder die mehreren Sicherheitsaktionen Elemente der folgenden Gruppe von Sicherheitsaktionen sind: Reduzieren einer momentanen Kraftfahrzeuggeschwindigkeit, Vorbereiten einer Bremsanlage des Kraftfahrzeugs auf eine Bremsung, Durchführen einer Umfeldanalyse des angepassten Sicherheitsbereichs, Durchführen eines Notstopps.

Durch das Vorsehen, dass eine momentane Kraftfahrzeuggeschwindigkeit reduziert wird, wird insbesondere der technische Vorteil bewirkt, dass ein Kollisionsrisiko noch weiter effizient verringert werden kann. Insbesondere kann dadurch der technische Vorteil bewirkt werden, dass, sollte es zu einer Kollision kommen, aufgrund der reduzierten Kraftfahrzeuggeschwindigkeit eine Unfallschwere verringert werden kann.

Insbesondere das Vorbereiten der Bremsanlage des Kraftfahrzeugs auf eine Bremsung weist insbesondere den technischen Vorteil auf, dass eine Reaktionszeit der Bremsanlage, wenn ein Bremsmoment angefordert wird, effizient verringert ist. Dadurch kann in vorteilhafter Weise ein Bremsweg effizient verkürzt werden.

Insbesondere das Durchführen einer Umfeldanalyse des angepassten Sicherheitsbereichs weist insbesondere den technischen Vorteil auf, dass effizient bestimmt werden kann, in welche Richtung sich das Objekt bezogen auf das Kraftfahrzeug bewegen wird. Insbesondere kann dadurch in vorteilhafter Weise effizient abgeschätzt oder bestimmt werden, wie hoch ein Kollisionsrisiko einer möglichen Kollision ist. Insbesondere entspricht das Durchführen einer Umfeldanalyse einem Wiederholen einer Umfeldanalyse des angepassten Sicherheitsbereichs. Dadurch kann zum Beispiel der technische Vorteil bewirkt werden, dass eventuelle Fehler in einer vorherigen Umfeldanalyse effizient erkannt werden können, so dass dann entsprechend reagiert werden kann.

Insbesondere das Durchführen eines Notstopps weist insbesondere den technischen Vorteil auf, dass ein Kollisionsrisiko noch weiter effizient verringert werden kann. Insbesondere kann dadurch, sollte es zu einer Kollision kommen, eine Unfallschwere noch weiter effizient verringert werden. Ein Notstopp bezeichnet insbesondere ein Anhalten des Kraftfahrzeugs mit einem maximal möglichen Bremsmoment (Vollbremsung).

Gemäß einer weiteren Ausführungsform ist vorgesehen, dass die Durchführung eine Fernsteuerung der einen Sicherheitsaktion oder von einer oder mehreren der mehreren Sicherheitsaktionen umfasst.

Dadurch wird insbesondere der technische Vorteil bewirkt, dass das Kraftfahrzeug selbst nicht notwendigerweise dafür ausgebildet sein muss, autonom zu entscheiden, welche der Sicherheitsaktionen es durchführen soll. Denn dies wird kraftfahrzeugextern durchgeführt, das Kraftfahrzeug wird also ferngesteuert. Das Fernsteuern oder die Fernsteuerung umfasst insbesondere, dass Fernsteuerungsbefehle an das Kraftfahrzeug über ein Kommunikationsnetzwerk gesendet werden, ansprechend auf welche das Kraftfahrzeug die eine oder die mehreren Sicherheitsaktionen durchführen kann respektive durchführt.

So ist also nach einer Ausführungsform vorgesehen, dass das Kraftfahrzeug derart ferngesteuert wird, dass eine momentane Kraftfahrzeuggeschwindigkeit reduziert wird. Insbesondere ist nach einer Ausführungsform vorgesehen, dass das Kraftfahrzeug derart ferngesteuert wird, dass eine Bremsanlage des Kraftfahrzeugs auf eine Bremsung vorbereitet wird. Insbesondere ist nach einer Ausführungsform vorgesehen, dass das Kraftfahrzeug derart ferngesteuert wird, dass das Kraftfahrzeug einen Notstopp durchführt. Das heißt also, dass das Kraftfahrzeug ferngesteuert angehalten wird.

Nach einer Ausführungsform umfasst das Überwachen, dass mittels eines oder mehrerer Umfeldsensoren (zum Beispiel des Kraftfahrzeugs und/oder des Parkplatzes) der angepasste Sicherheitsbereich erfasst wird, um dem erfassten Sicherheitsbereich entsprechende Umfelddaten zu ermitteln, die dann für eine Umfeldanalyse bereitgestellt werden.

Das Kraftfahrzeug fährt erfindungsgemäss fahrerlos innerhalb des Parkplatzes Eine fahrer- oder führerlose Fahrt des Kraftfahrzeugs umfasst, dass das Kraftfahrzeug ferngesteuert wird. Eine solche fahrer- oder führerlose Fahrt des Kraftfahrzeugs umfasst nach einer Ausführungsform, dass das Kraftfahrzeug autonom, also selbständig, fährt. Bei einer autonomen Fahrt des Kraftfahrzeugs ist nach einer Ausführungsform vorgesehen, dass das Kraftfahrzeug hierbei zumindest teilweise unterstützt, also assistiert, wird. Das heißt, dass dem Kraftfahrzeug zum Beispiel bei seiner autonomen Fahrt assistiert werden kann respektive wird. Ein solches Assistieren umfasst zum Beispiel, dass dem Kraftfahrzeug Fahrdaten über ein Kommunikationsnetzwerk gesendet werden, basierend auf welchen das Kraftfahrzeug autonom fahren kann. Solche Daten umfassen zum Beispiel Kartendaten einer digitalen Karte des Parkplatzes, Solltrajektoriendaten einer vom Kraftfahrzeug abzufahrenden Soll-Trajektorie, Zielpositionsdaten einer vom Kraftfahrzeug anzufahrenden Zielposition innerhalb des Parkplatzes.

Nach einer Ausführungsform führt das Kraftfahrzeug einen automatischen Parkvorgang innerhalb des Parkplatzes durch. Das heißt, dass die Fahrt des Kraftfahrzeugs entlang der Soll-Trajektorie von einem automatischen Parkvorgang umfasst ist. Ein solch automatischer Parkvorgang kann auch als ein AVP-Vorgang bezeichnet werden. "AVP" steht für "Automated Valet Parking" und kann mit automatischer Parkvorgang übersetzt werden.

Im Rahmen eines solchen AVP-Vorgangs fährt das Kraftfahrzeug automatisch (ferngesteuert oder autonom oder eine Teilstrecke autonom und eine weitere Teilstrecke ferngesteuert) innerhalb eines Parkplatzes, um an einer Parkposition zu parken. Das heißt, dass im Rahmen eines AVP-Vorgangs zum Beispiel vorgesehen ist, dass das Kraftfahrzeug automatisch von einer Abgabeposition, an welcher ein Fahrer des Kraftfahrzeugs das Kraftfahrzeug für die Durchführung eines AVP-Vorgangs abgestellt hat, zu einer Parkposition fährt und sich dort automatisch abstellt. Ein AVP-Vorgang umfasst nach einer Ausführungsform, dass das Kraftfahrzeug automatisch von einer Parkposition zu einer Abholposition fährt und sich dort automatisch abstellt, an welcher eine Person das Kraftfahrzeug wieder übernehmen kann.

Im Rahmen einer fahrer- oder führerlosen Fahrt muss sich somit kein menschlicher Fahrer mehr im Kraftfahrzeug selbst befinden, um das Kraftfahrzeug zu führen.

Die Erfindung wird im Folgenden anhand von bevorzugten Ausführungsbeispielen näher erläutert. Hierbei zeigen
- Fig. 1: ein Ablaufdiagramm eines Verfahrens zum Verringern eines Kollisionsrisikos einer Kollision eines Kraftfahrzeugs mit einem Objekt,
- Fig. 2: eine Vorrichtung zum Verringern eines Kollisionsrisikos einer Kollision eines Kraftfahrzeugs mit einem Objekt,
- Fig. 3: ein Kraftfahrzeug,
- Fig. 4: einen Parkplatz und
- Fig. 5: das Kraftfahrzeug 301 während einer Fahrt innerhalb eines Parkplatzes.

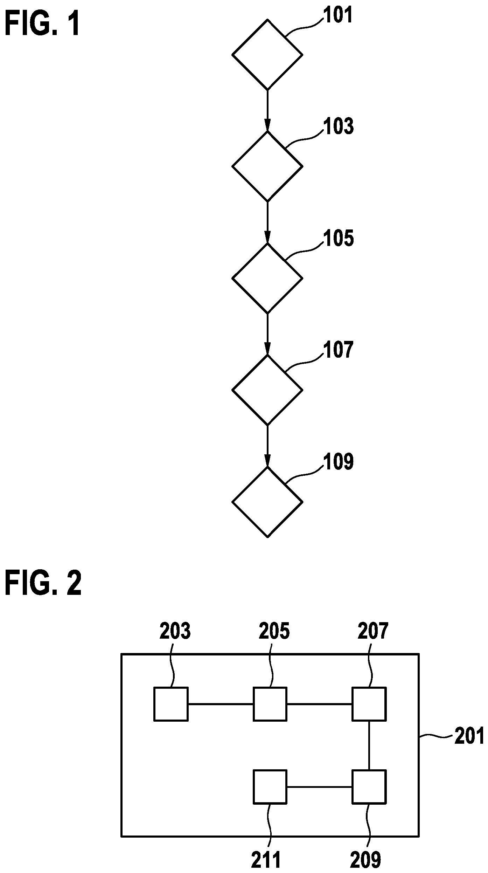

Fig. 1 zeigt ein Ablaufdiagramm eines Verfahrens zum Verringern eines Kollisionsrisikos einer Kollision eines Kraftfahrzeugs mit einem Objekt.

Das Verfahren umfasst die folgenden Schritte:
- Vorgeben 101 eines Sicherheitsbereichs, der einen abgegrenzten Teilbereich eines momentanen Kraftfahrzeugumfelds eines innerhalb eines Parkplatzes fahrenden Kraftfahrzeugs festlegt,
- Ermitteln 103 eines sich innerhalb eines Parkplatzes befindlichen als kritisch klassifizierten Orts,
- Anpassen 105 des vorgegebenen Sicherheitsbereichs bei einer Fahrt des Kraftfahrzeugs auf den kritischen Ort zu derart, dass der kritische Ort innerhalb des angepassten Sicherheitsbereichs liegt,
- Überwachen 107 des angepassten Sicherheitsbereichs während der Fahrt des Kraftfahrzeugs auf den kritischen Ort zu auf ein sich in den angepassten Sicherheitsbereich bewegendes Objekt und/oder ein sich innerhalb des angepassten Sicherheitsbereichs befindliches Objekt,
- Steuern 109 einer Durchführung einer oder mehrerer Sicherheitsaktionen basierend auf der Überwachung, um ein Kollisionsrisiko einer Kollision des Kraftfahrzeugs mit dem Objekt zu verringern.

Fig. 2 zeigt eine Vorrichtung 201 zum Verringern eines Kollisionsrisikos einer Kollision eines Kraftfahrzeugs mit einem Objekt.

Die Vorrichtung 201 umfasst:
- eine Vorgabeeinrichtung 203 zum Vorgeben eines Sicherheitsbereichs, der einen abgegrenzten Teilbereich eines momentanen Kraftfahrzeugumfelds eines innerhalb eines Parkplatzes fahrenden Kraftfahrzeugs festlegt,
- eine Ermittlungseinrichtung 205 zum Ermitteln eines sich innerhalb eines Parkplatzes befindlichen als kritisch klassifizierten Orts,
- eine Anpassungseinrichtung 207 zum Anpassen des vorgegebenen Sicherheitsbereichs bei einer Fahrt des Kraftfahrzeugs auf den kritischen Ort zu derart, dass der kritische Ort innerhalb des angepassten Sicherheitsbereichs liegt,
- eine Überwachungseinrichtung 209 zum Überwachen des angepassten Sicherheitsbereichs während der Fahrt des Kraftfahrzeugs auf den kritischen Ort zu auf ein sich in den angepassten Sicherheitsbereich bewegendes Objekt und/oder ein sich innerhalb des angepassten Sicherheitsbereichs befindliches Objekt,
- eine Steuerungseinrichtung 211 zum Steuern einer Durchführung einer oder mehrerer Sicherheitsaktionen basierend auf der Überwachung, um ein Kollisionsrisiko einer Kollision des Kraftfahrzeugs mit dem Objekt zu verringern.

Nach einer Ausführungsform umfasst die Vorrichtung 201 einen oder mehrere Umfeldsensoren.

Nach einer Ausführungsform umfasst die Vorrichtung 201 eine Kommunikationsschnittstelle für eine Kommunikation über ein Kommunikationsnetzwerk.

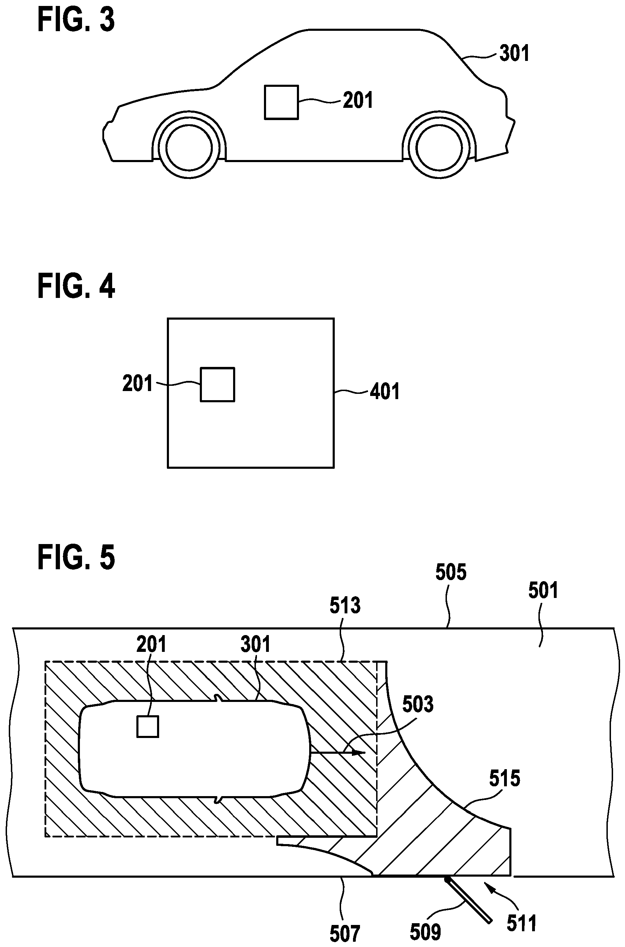

Fig. 3 zeigt ein Kraftfahrzeug 301, welches die Vorrichtung 201 der Fig. 2 umfasst. Der Übersicht halber sind die Elemente 203, 205, 207, 209, 211 in der Vorrichtung 201 nicht gezeigt.

Nach einer Ausführungsform umfasst das Kraftfahrzeug 301 einen oder mehrere Umfeldsensoren.

Nach einer Ausführungsform umfasst das Kraftfahrzeug 301 eine Kommunikationsschnittstelle zur Kommunikation über ein Kommunikationsnetzwerk.

Fig. 4 zeigt einen Parkplatz 401 für Kraftfahrzeuge, wobei der Parkplatz 401 die Vorrichtung 201 der Fig. 2 umfasst. Der Übersicht halber sind analog zu Fig. 3 die Elemente 203, 205, 207, 209, 211 in der Vorrichtung 201 nicht gezeigt.

Nach einer Ausführungsform umfasst der Parkplatz 401 einen oder mehrere Umfeldsensoren.

Nach einer Ausführungsform umfasst der Parkplatz 401 eine Kommunikationsschnittstelle zur Kommunikation über ein Kommunikationsnetzwerk.

Die Vorrichtung 201 des Parkplatzes 401 ist zum Beispiel von einem nicht gezeigten Parkplatzverwaltungssystem umfasst. Ein Parkplatzverwaltungssystem koordiniert und steuert einen Betrieb des Parkplatzes 401. Zum Beispiel steuert ein Parkplatzverwaltungssystem AVP-Vorgänge für Kraftfahrzeuge.

Fig. 5 zeigt das Kraftfahrzeug 301 bei einer Fahrt auf einer Fahrbahn 501.

Die Fahrbahn 501 ist zum Beispiel vom Parkplatz 401 der Fig. 4 umfasst.

Eine Fahrtrichtung des Kraftfahrzeugs 301 ist mit einem Pfeil mit dem Bezugszeichen 503 symbolisch gekennzeichnet. Bezogen auf die Fahrtrichtung 503 links vom Kraftfahrzeug 301 befindet sich eine Wand 505. Bezogen auf die Fahrtrichtung 503 rechts vom Kraftfahrzeug 301 befindet sich eine weitere Wand 507. Die rechte Wand 507 weist eine Öffnung 511 auf, die mittels einer Tür 509 verschlossen werden kann. In der in Fig. 5 gezeigten Darstellung ist die Tür 509 in einer Offenstellung. Das heißt also, dass zum Beispiel Personen durch die Öffnung 511 auf die Fahrbahn 501 treten können. Die Öffnung 511 ist somit ein kritischer Ort.

Daher ist vorgesehen, dass ein vorgegebener Sicherheitsbereich entsprechend angepasst wird, um den Bereich vor der Öffnung 511 auf der Fahrbahn 501 zu überwachen und soweit technisch möglich die Öffnung 511 selbst zu überwachen.

Der vorgegebene Sicherheitsbereich ist hier teilweise gestrichelt dargestellt und weist eine Rechteckform auf und ist mit dem Bezugszeichen 513 gekennzeichnet. Dieser vorgegebene Sicherheitsbereich 513 wird vergrößert, um den kritischen Ort, also den Ort vor der Öffnung 511, zu umfassen. Der vergrößerte oder angepasste Sicherheitsbereich ist mit dem Bezugszeichen 515 gekennzeichnet.

Das heißt, dass dieser vergrößerte oder angepasste Sicherheitsbereich 515 sowohl den ursprünglichen vorgegebenen Sicherheitsbereich 513 umfasst als auch einen entsprechend vergrößerten Abschnitt, der in der Figur 5 zeichnerisch mit einer anderen Schraffur dargestellt ist als die Schraffur des ursprünglichen Sicherheitsbereichs 513 und der der Übersicht halber mit dem Bezugszeichen 517 gekennzeichnet ist.

Die Erfindung umfasst also insbesondere und unter anderem den Gedanken, ein effizientes technisches Konzept bereitzustellen, welches es ermöglicht, dass ein Kollisionsrisiko eines Kraftfahrzeugs mit einem Objekt effizient verringert werden kann.

Ein erfindungsgemäßer Grundgedanke ist insbesondere darin zu sehen, dass mittels eines dynamisch anpassbaren Sicherheitsbereichs in Bezug auf dessen Größe geprüft wird, ob ein Objekt (Kraftfahrzeug, Mensch, Tier) in einer bekannten respektive erkannten gefährlichen Position (kritischer Ort) ist. Im Englischen kann ein solch kritischer Ort als "Hazard Point" bezeichnet werden. Hierbei ist erfindungsgemäß vorgesehen, dass eine Form und/oder Größe eines Sicherheitsbereichs dynamisch so angepasst wird, dass dieser kritische Ort abgedeckt ist. Kritische Orte sind zum Beispiel: Türen, Ausgänge, Eingänge, Schranken, Kurven und Rampen.

Nach einer Ausführungsform sind so genannte spontane kritische Orte vorgesehen. Solche kritischen Orte entstehen zum Beispiel dann, wenn zum Beispiel ein mobiles Objekt, zum Beispiel eine Person, auf die Fahrbahn oder auf den Fahrweg des Kraftfahrzeugs treten will respektive sich bereits auf der Fahrbahn respektive auf dem Fahrweg befindet. Das heißt also, wenn zum Beispiel eine Person detektiert wird, die zwischen zwei Kraftfahrzeugen auf die Fahrbahn tritt respektive treten wird, so ist dieser Ort ein kritischer Ort und wird insofern mittels Anpassung vom angepassten Sicherheitsbereich umfasst werden.

Nach einer Ausführungsform wird der Sicherheitsbereich auf den kritischen Ort ausgerichtet. Dies zum Beispiel analog zu einem adaptiven Fernlicht respektive adaptiven Abblendlicht.

Vor und nach dem kritischen Ort ist nach einer Ausführungsform die Form des angepassten Sicherheitsbereichs rechteckförmig oder ovalförmig oder rund.

Nach einer weiteren Ausführungsform wird die rechteckige Form respektive die runde Form respektive die ovale Form für den kritischen Ort vergrößert.

Die Überwachung des angepassten Sicherheitsbereichs wird nach einer Ausführungsform vom einem oder mehreren Umfeldsensoren durchgeführt. Die mehreren Umfeldsensoren sind zum Beispiel Teile von Umfeldsensorsystemen. Hierfür werden nach einer Ausführungsform die Umfeldsensoren des Kraftfahrzeugs respektive die Umfeldsensoren einer Parkplatzinfrastruktur respektive die Umfeldsensoren von sowohl dem Kraftfahrzeug als auch von der Parkplatzinfrastruktur verwendet.

Nach einer Ausführungsform ist vorgesehen, dass sowohl im Kraftfahrzeug selbst ein Sicherheitsbereich bestimmt und entsprechend angepasst und entsprechend überwacht wird. Gleichzeitig ist nach dieser Ausführungsform vorgesehen, dass auch kraftfahrzeugextern mittels der Vorrichtung des Parkplatzes entsprechend ein Sicherheitsbereich bestimmt sowie eine Anpassung des bestimmten Sicherheitsbereichs sowie eine entsprechende Überwachung des angepassten Sicherheitsbereichs durchgeführt werden.

Die Ergebnisse beider Überwachungen werden dann nach dieser Ausführungsform verwendet, um die Durchführung der einen oder der mehreren Sicherheitsaktionen zu steuern.

Eine Kenntnis des oder der kritischen Orte und damit die entsprechend notwendige Veränderung der Form des Sicherheitsbereichs werden nach weiteren nicht gezeigten Ausführungsformen wie folgt bereitgestellt respektive getriggert:

Die kritischen Orte sind zum Beispiel in einer digitalen Karte gespeichert. Die digitale Karte ist zum Beispiel im Kraftfahrzeug gespeichert. Die digitale Karte ist zum Beispiel im Parkplatzmanagementsystem gespeichert und wird nach einer Ausführungsform vom Parkplatzmanagementsystem an das Kraftfahrzeug über ein Kommunikationsnetzwerk übertragen. Die digitale Karte gibt also Kenntnis über kritische Ort und triggert dadurch eine Anpassung des Sicherheitsbereichs.

Nach einer Ausführungsform wird ein Triggersignal vom Parkplatzmanagementsystem an das Kraftfahrzeug übertragen, das vorgibt, wo sich ein kritischer Ort im Kraftfahrzeugumfeld des Kraftfahrzeugs befindet.

Detektiert das Kraftfahrzeug (zum Beispiel mittels eines Umfeldsensors respektive eines Umfeldanalysesystems) einen kritischen Ort in seinem Umfeld, so ist dies (die Detektion) eine Triggerung für ein Anpassen des Sicherheitsbereichs. Zum Beispiel detektiert das Kraftfahrzeug, dass es sich momentan auf einer Rampe befindet (zum Beispiel mittels eines Neigungssensors). Zum Beispiel detektiert das Kraftfahrzeug, dass sich in seinem Umfeld eine Tür befindet. Dies zum Beispiel basierend auf einer Bildverarbeitung von Videodaten eines Videosensors des Kraftfahrzeugs.

## Patentansprüche

1. Verfahren zum Verringern eines Kollisionsrisikos einer Kollision eines Kraftfahrzeugs (301) mit einem Objekt, wobei das Kraftfahrzeug fahrerlos innerhalb eines Parkplatzes (401) fährt, umfassend die folgenden Schritte:
- Vorgeben (101) eines Sicherheitsbereichs (513), der einen abgegrenzten Teilbereich eines momentanen Kraftfahrzeugumfelds eines innerhalb eines Parkplatzes (401) fahrenden Kraftfahrzeugs (301) festlegt,
- Ermitteln (103) eines sich innerhalb eines Parkplatzes (401) befindlichen als kritisch klassifizierten Orts, wobei das Ermitteln (103) des kritischen Orts eine Umfeldanalyse von Umfelddaten auf mögliche kritische Orte umfasst, wobei die Umfelddaten mittels eines oder mehrerer Umfeldsensoren bereitgestellt werden, die das momentane Kraftfahrzeugumfeld erfasst haben, wobei einer oder mehrere der Umfeldsensoren Umfeldsensoren des Parkplatzes (401) sind,
- Anpassen (105) des vorgegebenen Sicherheitsbereichs (513) bei einer Fahrt des Kraftfahrzeugs (301) auf den kritischen Ort zu derart, dass der kritische Ort innerhalb des angepassten Sicherheitsbereichs (515) liegt,
- Überwachen (107) des angepassten Sicherheitsbereichs (515) während der Fahrt des Kraftfahrzeugs (301) auf den kritischen Ort zu auf ein sich in den angepassten Sicherheitsbereich (515) bewegendes Objekt und/oder ein sich innerhalb des angepassten Sicherheitsbereichs (515) befindliches Objekt,
- Steuern (109) einer Durchführung einer oder mehrerer Sicherheitsaktionen basierend auf der Überwachung, um ein Kollisionsrisiko einer Kollision des Kraftfahrzeugs (301) mit dem Objekt zu verringern, wobei die eine oder die mehreren Sicherheitsaktionen Elemente der folgenden Gruppe von Sicherheitsaktionen sind: Reduzieren einer momentanen Kraftfahrzeuggeschwindigkeit, Vorbereiten einer Bremsanlage des Kraftfahrzeugs auf eine Bremsung, Durchführen eines Notstopps.

2. Verfahren nach Anspruch 1, wobei das Ermitteln (103) des kritischen Orts ein Auslesen eines als kritisch klassifizierten Orts aus einer digitalen Karte des Parkplatzes (401) umfasst.

3. Verfahren nach Anspruch 1, wobei, wenn die Umfeldanalyse ergeben hat, dass sich ein Objekt in einen Fahrweg des Kraftfahrzeugs (301) bewegt hat oder bewegen wird, ein momentaner Ort des Objekts auf dem Fahrweg und/oder ein Ort, an welchem das Objekt sich in den Fahrweg bewegen wird, als ein kritischer Ort respektive als kritische Orte klassifiziert werden.

4. Verfahren nach Anspruch 1 oder 3, wobei, wenn die Umfeldanalyse ergeben hat, dass sich zumindest ein Parkplatzinfrastrukturelement im Kraftfahrzeugumfeld befindet, ein Ort des Parkplatzinfrastrukturelements als kritischer Ort klassifiziert wird, wobei das zumindest eine Parkplatzinfrastrukturelement ein Element aus der folgenden Gruppe von Parkplatzinfrastrukturelementen ist: Tür (509), Rampe, Eingang, Einfahrt, Ausgang, Ausfahrt, Schranke, Kurve, Säule.

5. Verfahren nach einem der vorherigen Ansprüche, wobei das Ermitteln (103) des kritischen Orts umfasst, dass Neigungsdaten eines vom Kraftfahrzeug (301) umfassten Neigungssensors auf eine Neigung des Kraftfahrzeugs (301) analysiert werden, wobei, wenn eine detektierte Neigung größer oder größer gleich einem vorbestimmten Neigungsschwellwert ist, bestimmt wird, dass sich das Kraftfahrzeug (301) momentan auf einer Rampe befindet, so dass die Rampe als kritischer Ort klassifiziert wird.

6. Verfahren nach einem der vorherigen Ansprüche, wobei das Anpassen (105) des vorgegebenen Sicherheitsbereichs (513) umfasst, dass der vorgegebene Sicherheitsbereich (513) auf den kritischen Ort ausgerichtet wird.

7. Verfahren nach einem der vorherigen Ansprüche, wobei das Anpassen (105) ansprechend auf ein Triggersignal initiiert und durchgeführt wird.

8. Verfahren nach einem der vorherigen Ansprüche, wobei der vorgegebene Sicherheitsbereich (513) eine Rechteckform, eine Kreisform oder eine Ovalform aufweist und zumindest teilweise, insbesondere vollständig, das Kraftfahrzeug (301) umgibt, wobei das Anpassen (105) ein Vergrößern der Rechteckform, der Kreisform oder der Ovalform umfasst.

9. Vorrichtung (201) zum Verringern eines Kollisionsrisikos einer Kollision eines Kraftfahrzeugs (301) mit einem Objekt, wenn das Kraftfahrzeug fahrerlos innerhalb eines Parkplatzes (401) fährt, umfassend:
- eine Vorgabeeinrichtung (203) zum Vorgeben eines Sicherheitsbereichs (513), der einen abgegrenzten Teilbereich eines momentanen Kraftfahrzeugumfelds eines innerhalb eines Parkplatzes (401) fahrenden Kraftfahrzeugs (301) festlegt,
- eine Ermittlungseinrichtung (205) zum Ermitteln eines sich innerhalb eines Parkplatzes (401) befindlichen als kritisch klassifizierten Orts, wobei die Ermittlungseinrichtung (205) ausgebildet ist, zum Ermitteln des kritischen Orts eine Umfeldanalyse von dem momentanen Kraftfahrzeugumfeld entsprechenden Umfelddaten auf mögliche kritische Orte durchzuführen, wobei die Umfelddaten mittels eines oder mehrerer Umfeldsensoren bereitgestellt werden, die das momentane Kraftfahrzeugumfeld erfasst haben, wobei einer oder mehrere der Umfeldsensoren Umfeldsensoren des Parkplatzes (401) sindeine Anpassungseinrichtung (207) zum Anpassen des vorgegebenen Sicherheitsbereichs (513) bei einer Fahrt des Kraftfahrzeugs (301) auf den kritischen Ort zu derart, dass der kritische Ort innerhalb des angepassten Sicherheitsbereichs (515) liegt,
- eine Überwachungseinrichtung (209) zum Überwachen des angepassten Sicherheitsbereichs (515) während der Fahrt des Kraftfahrzeugs (301) auf den kritischen Ort zu auf ein sich in den angepassten Sicherheitsbereich (515) bewegendes Objekt und/oder ein sich innerhalb des angepassten Sicherheitsbereichs (515) befindliches Objekt,
- eine Steuerungseinrichtung (211) zum Steuern einer Durchführung einer oder mehrerer Sicherheitsaktionen basierend auf der Überwachung, um ein Kollisionsrisiko einer Kollision des Kraftfahrzeugs (301) mit dem Objekt zu verringern, wobei die eine oder die mehreren Sicherheitsaktionen Elemente der folgenden Gruppe von Sicherheitsaktionen sind: Reduzieren einer momentanen Kraftfahrzeuggeschwindigkeit, Vorbereiten einer Bremsanlage des Kraftfahrzeugs auf eine Bremsung, Durchführen eines Notstopps.

10. Vorrichtung (201) nach Anspruch 9, wobei die Ermittlungseinrichtung (205) ausgebildet ist, zum Ermitteln des kritischen Orts einen als kritisch klassifizierten Ort aus einer digitalen Karte des Parkplatzes (401) auszulesen.

11. Vorrichtung (201) nach Anspruch 10, wobei die Ermittlungseinrichtung (205) ausgebildet ist, wenn die Umfeldanalyse ergeben hat, dass sich ein Objekt in einen Fahrweg des Kraftfahrzeugs (301) bewegt hat oder bewegen wird, ein momentaner Ort des Objekts auf dem Fahrweg und/oder ein Ort, an welchem das Objekt sich in den Fahrweg bewegen wird, als einen kritischen Ort respektive als kritische Orte zu klassifizieren.

12. Vorrichtung (201) nach Anspruch 9 oder 11, wobei die Ermittlungseinrichtung (205) ausgebildet ist, wenn die Umfeldanalyse ergeben hat, dass sich zumindest ein Parkplatzinfrastrukturelement im Kraftfahrzeugumfeld befindet, einen Ort des Parkplatzinfrastrukturelements als kritischen Ort zu klassifizieren, wobei das zumindest eine Parkplatzinfrastrukturelement ein Element aus der folgenden Gruppe von Parkplatzinfrastrukturelementen ist: Tür (509), Rampe, Eingang, Einfahrt, Ausgang, Ausfahrt, Schranke, Kurve, Säule.

13. Vorrichtung (201) nach einem der Ansprüche 9 bis 12, wobei die Ermittlungseinrichtung (205) ausgebildet ist, zum Ermitteln des kritischen Orts Neigungsdaten eines vom Kraftfahrzeug (301) umfassten Neigungssensors auf eine Neigung des Kraftfahrzeugs (301) zu analysieren, wobei die Ermittlungseinrichtung (205) ferner ausgebildet ist, wenn eine detektierte Neigung größer oder größer gleich einem vorbestimmten Neigungsschwellwert ist, zu bestimmen, dass sich das Kraftfahrzeug (301) momentan auf einer Rampe befindet, und die Rampe als kritischen Ort zu klassifizieren.

14. Vorrichtung (201) nach einem der Ansprüche 9 bis 13, wobei die Anpassungseinrichtung (207) ausgebildet ist, zum Anpassen des vorgegebenen Sicherheitsbereichs (513) den vorgegebenen Sicherheitsbereich (513) auf den kritischen Ort auszurichten.

15. Vorrichtung (201) nach einem der Ansprüche 9 bis 14, wobei die Anpassungseinrichtung (207) ausgebildet ist, das Anpassen ansprechend auf ein Triggersignal zu initiieren und durchzuführen.

16. Vorrichtung (201) nach einem der Ansprüche 9 bis 15, wobei die Anpassungseinrichtung (207) ausgebildet ist, zum Anpassen eines eine Rechteckform, eine Kreisform oder eine Ovalform aufweisenden und das Kraftfahrzeug (301) zumindest teilweise, insbesondere vollständig, umgebenden vorgegebenen Sicherheitsbereichs (513) die Rechteckform, die Kreisform oder die Ovalform zu vergrößern.

17. Parkplatz (401) für Kraftfahrzeuge (301), umfassend die Vorrichtung (201) nach einem der Ansprüche 9 bis 16.

## Claims

1. Method for reducing a risk of a collision between a motor vehicle (301) and an object, wherein the motor vehicle is driving in a driverless manner within a parking area (401), comprising the following steps of:
- specifying (101) a safety area (513) which defines a delimited section of a current motor vehicle environment of a motor vehicle (301) driving within a parking area (401),
- identifying (103) a location classified as critical within a parking area (401), wherein the identification (103) of the critical location comprises an environmental analysis of environmental data with regard to possible critical locations, wherein the environmental data are provided by means of one or more environmental sensors which have captured the current motor vehicle environment, wherein one or more of the environmental sensors are environmental sensors of the parking area (401),
- adapting (105) the specified safety area (513), when the motor vehicle (301) is driving towards the critical location, such that the critical location is within the adapted safety area (515),
- monitoring (107) the adapted safety area (515), while the motor vehicle (301) is driving towards the critical location, for an object moving into the adapted safety area (515) and/or for an object within the adapted safety area (515),
- controlling (109) performance of one or more safety actions on the basis of the monitoring in order to reduce a risk of a collision between the motor vehicle (301) and the object, wherein the one or more safety actions are elements of the following group of safety actions: reducing a current motor vehicle speed, preparing a brake system of the motor vehicle for braking, carrying out an emergency stop.

2. Method according to Claim 1, wherein the identification (103) of the critical location comprises reading a location classified as critical from a digital map of the parking area (401).

3. Method according to Claim 1, wherein, if the environmental analysis has revealed that an object has moved or will move into a route of the motor vehicle (301), a current location of the object on the route and/or a location at which the object will move into the route is/are classified as a critical location or critical locations.

4. Method according to Claim 1 or 3, wherein, if the environmental analysis has revealed that at least one parking area infrastructure element is in the motor vehicle environment, a location of the parking area infrastructure element is classified as a critical location, wherein the at least one parking area infrastructure element is an element from the following group of parking area infrastructure elements: door (509), ramp, entry, entrance, way out, exit, barrier, bend, pillar.

5. Method according to one of the preceding claims, wherein the identification (103) of the critical location comprises analysing inclination data from an inclination sensor included in the motor vehicle (301) with respect to an inclination of the motor vehicle (301), wherein, if a detected inclination is greater than or greater than or equal to a predetermined inclination threshold value, it is determined that the motor vehicle (301) is currently on a ramp, and so the ramp is classified as a critical location.

6. Method according to one of the preceding claims, wherein the adaptation (105) of the specified safety area (513) comprises aligning the specified safety area (513) with the critical location.

7. Method according to one of the preceding claims, wherein the adaptation (105) is initiated and carried out in response to a trigger signal.

8. Method according to one of the preceding claims, wherein the specified safety area (513) has a rectangular shape, a circular shape or an oval shape and surrounds the motor vehicle (301) at least partially, in particular completely, wherein the adaptation (105) comprises increasing the size of the rectangular shape, the circular shape or the oval shape.

9. Apparatus (201) for reducing a risk of a collision between a motor vehicle (301) and an object when the motor vehicle is driving in a driverless manner within a parking area (401), comprising:
- a specification device (203) for specifying a safety area (513) which defines a delimited section of a current motor vehicle environment of a motor vehicle (301) driving within a parking area (401),
- an identification device (205) for identifying a location classified as critical within a parking area (401), wherein, in order to identify the critical location, the identification device (205) is designed to carry out an environmental analysis of environmental data corresponding to the current motor vehicle environment with regard to possible critical locations, wherein the environmental data are provided by means of one or more environmental sensors which have captured the current motor vehicle environment, wherein one or more of the environmental sensors are environmental sensors of the parking area (401), an adaptation device (207) for adapting the specified safety area (513), when the motor vehicle (301) is driving towards the critical location, such that the critical location is within the adapted safety area (515),
- a monitoring device (209) for monitoring the adapted safety area (515), while the motor vehicle (301) is driving towards the critical location, for an object moving into the adapted safety area (515) and/or for an object within the adapted safety area (515),
- a control device (211) for controlling performance of one or more safety actions on the basis of the monitoring in order to reduce a risk of a collision between the motor vehicle (301) and the object, wherein the one or more safety actions are elements of the following group of safety actions: reducing a current motor vehicle speed, preparing a brake system of the motor vehicle for braking, carrying out an emergency stop.

10. Apparatus (201) according to Claim 9, wherein, in order to identify the critical location, the identification device (205) is designed to read a location classified as critical from a digital map of the parking area (401).

11. Apparatus (201) according to Claim 10, wherein, if the environmental analysis has revealed that an object has moved or will move into a route of the motor vehicle (301), the identification device (205) is designed to classify a current location of the object on the route and/or a location at which the object will move into the route as a critical location or critical locations.

12. Apparatus (201) according to Claim 9 or 11, wherein, if the environmental analysis has revealed that at least one parking area infrastructure element is in the motor vehicle environment, the identification device (205) is designed to classify a location of the parking area infrastructure element as a critical location, wherein the at least one parking area infrastructure element is an element from the following group of parking area infrastructure elements: door (509), ramp, entry, entrance, way out, exit, barrier, bend, pillar.

13. Apparatus (201) according to one of Claims 9 to 12, wherein, in order to determine the critical location, the identification device (205) is designed to analyse inclination data from an inclination sensor included in the motor vehicle (301) with respect to an inclination of the motor vehicle (301), wherein, if a detected inclination is greater than or greater than or equal to a predetermined inclination threshold value, the identification device (205) is also designed to determine that the motor vehicle (301) is currently on a ramp, and to classify the ramp as a critical location.

14. Apparatus (201) according to one of Claims 9 to 13, wherein, in order to adapt the specified safety area (513), the adaptation device (207) is designed to align the specified safety area (513) with the critical location.

15. Apparatus (201) according to one of Claims 9 to 14, wherein the adaptation device (207) is designed to initiate and carry out the adaptation in response to a trigger signal.

16. Apparatus (201) according to one of Claims 9 to 15, wherein, in order to adapt a specified safety area (513) that has a rectangular shape, a circular shape or an oval shape and surrounds the motor vehicle (301) at least partially, in particular completely, the adaptation device (207) is designed to increase the size of the rectangular shape, the circular shape or the oval shape.

17. Parking area (401) for motor vehicles (301), comprising the apparatus (201) according to one of Claims 9 to 16.

## Revendications

1. Procédé pour réduire un risque de collision d'un véhicule automobile (301) avec un objet, le véhicule automobile se déplaçant sans conducteur à l'intérieur d'un parking (401), comprenant les étapes suivantes :
- définir (101) une zone de sécurité (513) qui détermine une partie de zone délimitée d'un environnement actuel de véhicule automobile d'un véhicule automobile (301) se déplaçant à l'intérieur d'une place de stationnement (401),
- déterminer (103) un emplacement classé se trouvant à l'intérieur d'une place de stationnement (401) comme étant critique, la détermination (103) de l'emplacement critique comprenant une analyse environnementale de données d'environnement sur des emplacements critiques possibles, les données d'environnement étant fournies au moyen d'un ou de plusieurs capteurs d'environnement qui ont détecté l'environnement actuel du véhicule automobile, un ou plusieurs des capteurs d'environnement étant des capteurs d'environnement de la place de stationnement (401),
- adapter (105) la zone de sécurité prédéterminée (513) lors d'un déplacement du véhicule automobile (301) vers l'emplacement critique de telle sorte que l'emplacement critique se trouve à l'intérieur de la zone de sécurité adaptée (515),
- surveiller (107) la zone de sécurité adaptée (515) pendant le déplacement du véhicule automobile (301) vers l'emplacement critique pour un objet se déplaçant dans la zone de sécurité adaptée (515) et/ou un objet se trouvant à l'intérieur de la zone de sécurité adaptée (515),
- commander (109) l'exécution d'une ou plusieurs actions de sécurité sur la base de la surveillance afin de réduire un risque de collision du véhicule automobile (301) avec l'objet, lesdites une ou plusieurs actions de sécurité étant des éléments du groupe d'actions de sécurité suivant : réduire une vitesse instantanée du véhicule automobile, préparer un système de freinage du véhicule automobile à un freinage, effectuer un arrêt d'urgence.

2. Procédé selon la revendication 1, dans lequel la détermination (103) de l'emplacement critique comprend une lecture d'un emplacement classé comme critique à partir d'une carte numérique du parking (401).

3. Procédé selon la revendication 1, dans lequel, si l'analyse environnementale a révélé qu'un objet s'est déplacé ou va se déplacer dans une voie de circulation du véhicule automobile (301), un emplacement actuel de l'objet sur la voie de circulation et/ou un emplacement où l'objet va se déplacer dans la voie de circulation sont classés respectivement comme étant un ou plusieurs emplacements critiques.

4. Procédé selon la revendication 1 ou 3, dans lequel, si l'analyse environnementale a révélé qu'au moins un élément d'infrastructure de parking se trouve dans l'environnement du véhicule automobile, un emplacement de l'élément d'infrastructure de parking est classé comme étant un emplacement critique, ledit au moins un élément d'infrastructure de parking étant un élément choisi dans le groupe suivant d'éléments d'infrastructure de parking : porte (509), rampe, entrée, voie d'entrée, sortie, voie de sortie, barrière, courbe, colonne.

5. Procédé selon l'une quelconque des revendications précédentes, dans lequel la détermination (103) de l'emplacement critique comprend l'analyse de données d'inclinaison d'un capteur d'inclinaison inclus dans le véhicule automobile (301) pour une inclinaison du véhicule automobile (301), grâce à quoi, si une inclinaison détectée est supérieure ou égale à une valeur seuil d'inclinaison prédéterminée, il est déterminé que le véhicule automobile (301) est actuellement sur une rampe, de sorte que la rampe est classée comme emplacement critique.

6. Procédé selon l'une quelconque des revendications précédentes, dans lequel l'adaptation (105) de la zone de sécurité prédéterminée (513) comprend l'alignement de la zone de sécurité prédéterminée (513) sur l'emplacement critique.

7. Procédé selon l'une des revendications précédentes, dans lequel l'adaptation (105) est initiée et réalisée en réponse à un signal de déclenchement.

8. Procédé selon l'une des revendications précédentes, dans lequel la zone de sécurité prédéterminée (513) présente une forme rectangulaire, une forme circulaire ou une forme ovale et entoure au moins partiellement, notamment complètement, le véhicule automobile (301), l'adaptation (105) comprenant un agrandissement de la forme rectangulaire, de la forme circulaire ou de la forme ovale.

9. Dispositif (201) pour réduire un risque de collision d'un véhicule automobile (301) avec un objet lorsque le véhicule automobile se déplace sans conducteur à l'intérieur d'un parking (401), comprenant :
- un dispositif de définition (203) pour définir une zone de sécurité (513) qui définit une partie de zone délimitée d'un environnement automobile actuel d'un véhicule automobile (301) se déplaçant à l'intérieur d'un parking (401),
- un dispositif de détermination (205) pour déterminer un emplacement classé comme critique se trouvant à l'intérieur d'une place de stationnement (401), le dispositif de détermination (205) étant conçu, pour déterminer l'emplacement critique, de façon à effectuer une analyse environnementale des données d'environnement correspondant à l'environnement actuel du véhicule automobile sur des emplacements critiques possibles, les données d'environnement étant fournies au moyen d'un ou de plusieurs capteurs d'environnement, qui ont détecté l'environnement actuel du véhicule automobile, un ou plusieurs des capteurs d'environnement étant des capteurs d'environnement du parking (401), un dispositif d'adaptation (207) pour adapter la zone de sécurité (513) prédéfinie lors d'un déplacement du véhicule automobile (301) vers l'emplacement critique de telle sorte que l'emplacement critique se trouve à l'intérieur de la zone de sécurité (515) adaptée,
- un dispositif de surveillance (209) pour surveiller la zone de sécurité adaptée (515) pendant le déplacement du véhicule automobile (301) vers l'emplacement critique, de façon à détecter un objet se déplaçant dans la zone de sécurité adaptée (515) et/ou un objet se trouvant à l'intérieur de la zone de sécurité adaptée (515),
- un moyen de commande (211) pour commander l'exécution d'une ou plusieurs actions de sécurité sur la base de la surveillance afin de réduire un risque de collision du véhicule automobile (301) avec l'objet, les une ou plusieurs actions de sécurité étant des éléments du groupe d'actions de sécurité suivant : réduction d'une vitesse instantanée du véhicule automobile, préparation d'un système de freinage du véhicule automobile à un freinage, exécution d'un arrêt d'urgence.

10. Dispositif (201) selon la revendication 9, dans lequel le dispositif de détermination (205) est conçu de façon à lire un emplacement classé comme critique à partir d'une carte numérique du parking (401) afin de déterminer l'emplacement critique.

11. Dispositif (201) selon la revendication 10, dans lequel le dispositif de détermination (205) est conçu, lorsque l'analyse environnementale a révélé qu'un objet s'est déplacé ou va se déplacer dans une voie de circulation du véhicule automobile (301), de façon à classer un endroit actuel de l'objet sur la voie de circulation et/ou un endroit où l'objet va se déplacer dans la voie de circulation, comme étant un emplacement critique, respectivement comme étant des emplacements critiques.

12. Dispositif (201) selon la revendication 9 ou la revendication 11, dans lequel le dispositif de détermination (205) est conçu, lorsque l'analyse environnementale a révélé qu'au moins un élément d'infrastructure de parking se trouve dans l'environnement du véhicule, de façon à classer un emplacement de l'élément d'infrastructure de parking comme étant un emplacement critique, ledit au moins un élément d'infrastructure de parking étant un élément du groupe suivant d'éléments d'infrastructure de parking : porte (509), rampe, entrée, voie d'entrée, sortie, voie de sortie, barrière, courbe, colonne.

13. Dispositif (201) selon l'une des revendications 9 à 12, dans lequel le dispositif de détermination (205) est conçu de façon à analyser des données d'inclinaison d'un capteur d'inclinaison inclus dans le véhicule automobile (301) lors d'une inclinaison du véhicule automobile (301) afin de déterminer l'emplacement critique, le dispositif de détermination (205) étant en outre conçu, lorsqu'une inclinaison détectée est supérieure ou égale à une valeur seuil d'inclinaison prédéterminée, de façon à déterminer que le véhicule automobile (301) se trouve actuellement sur une rampe, et pour classer la rampe comme étant un emplacement critique.

14. Dispositif (201) selon l'une des revendications 9 à 13, dans lequel le dispositif d'adaptation (207) est configuré pour aligner la zone de sécurité (513) prédéterminée sur l'emplacement critique, afin d'adapter la zone de sécurité (513) prédéterminée.

15. Dispositif (201) selon l'une des revendications 9 à 14, dans lequel le dispositif d'adaptation (207) est configuré pour initier et réaliser l'adaptation en réponse à un signal de déclenchement.

16. Dispositif (201) selon l'une des revendications 9 à 15, le dispositif d'adaptation (207) étant configuré pour agrandir la forme rectangulaire, la forme circulaire ou la forme ovale d'une zone de sécurité (513) prédéterminée présentant une forme rectangulaire, une forme circulaire ou une forme ovale et entourant au moins partiellement, notamment complètement, le véhicule automobile (301).

17. Place de stationnement (401) pour véhicule automobile (301), comprenant le dispositif (201) selon l'une quelconque des revendications 9 à 16.
